## Europäisches Patentamt
## European Patent Office
## Office européen des brevets

(19)

(11) Publication number: **0 118 562**

**A1**

(12)

# EUROPEAN PATENT APPLICATION
published in accordance with Art. 158(3) EPC

(21) Application number: **83902446.0**

(22) Date of filing: **29.07.83**

Data of the international application taken as a basis:

(86) International application number:
**PCT/JP83/00247**

(87) International publication number:
**WO84/01007 (15.03.84  84/07)**

(51) Int. Cl.³: **F 16 G 13/04**

---

(30) Priority: **01.09.82 JP  150679/82**
**26.01.83 JP  9865/83**

(43) Date of publication of application:
**19.09.84  Bulletin  84/38**

(84) Designated Contracting States:
**DE FR GB**

(71) Applicant: **TSUBAKIMOTO-MORSE CO LTD.**
**7-5 Goryo 3-chome Daito-shi**
**Osaka-fu 574(JP)**

(72) Inventor: **YOAN, Takeshi**
**Tsubakimoto-Morse Co., Ltd. 7-5, Goryo 3-chome**
**Daito-shi Osaka-fu 574(JP)**

(74) Representative: **Patentanwälte Grünecker, Dr.**
**Kinkeldey, Dr. Stockmair, Dr. Schumann, Jakob, Dr.**
**Bezold, Meister, Hilgers, Dr. Meyer-Plath**
**Maximilianstrasse 58**
**D-8000 München 22(DE)**

---

(54) **SILENT CHAIN.**

(57) A silent chain for transmitting power has lower centers of each of guide rings (3) provided on both outer sides of the chain expanded outward to provide a groove (7) which engages with the teeth of a sprocket, and a side guide (8). In another embodiment, a guide lever (17) guiding the sides of the sprocket teeth is provided on the lower outer surface of a groove (15) so that its inner surface engages with an outermost link plate (13), and a cavity (18) is formed at the upper center of the groove, to improve its transmission capacity.

Fig. 7

Fig. 14

Croydon Printing Company Ltd.

EP 0 118 562 A1

- 1 -

SPECIFICATION

SILENT CHAIN

FIELD OF ART

The present invention relates to a silent
chain in which transmission capacity per chain weight
is enhanced.

BACKGROUND ART

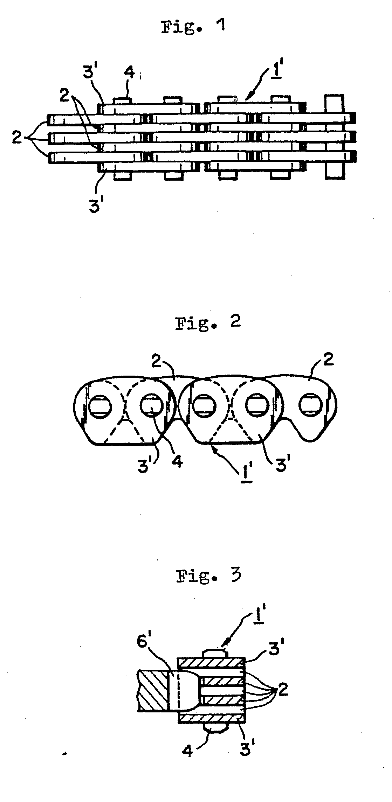

As shown in Figs. 1 to 3, a conventional
silent chain 1' is constructed such that a plurality
of meshing links 2 are superposed one upon another
lengthwise and widthwise, guide links 3' are disposed
on both outer sides of the chain, and they are connected
by connecting pins 4.

The meshing link 2 is meshed with a sprocket
tooth 6' to transmit power, and the guide link 3' is
merely provided to prevent the chain from being
disengaged from the sprocket, and is not meshed with
the sprocket not contributing to power transmission at all
between the chain and the sprocket.

Accordingly, when we think of the transmission
capacity of the conventional silent chain 1' with

respect to the sprocket, in a row provided with the guide links 3, power is transmitted by two meshing links 2, and in a row not provided with the guide links 3', power is transmitted by three meshing links 2. Thus, the transmission capacity of the entire chain 1' is limited by the strength of the surfaces of two meshing links 2.

It is therefore an object of the present invention to provide a silent chain which can enhance transmission capacity by using links, arranged as guide links    on both sides of the chain, which have a function as a meshing link in addition to a function as a guide link.


DISCLOSURE OF THE INVENTION

That is, the present invention provides a silent chain wherein a plurality of link plates having a shape to mesh with sprocket teeth  are superposed one upon another lengthwise and widthwise of the chain, which are connected widthwise by connecting pins, guide links provided on both outer sides having a central lower portion buldged outwardly to provide a groove to mesh- with the sprocket teeth and a side guide portion.

With this arrangement, as compared with a conventional silent chain in which guide links not directly
contributed to power transmission in cooperation with
the sprocket are mounted on both sides of the chain,
transmission capacity per chain weight is enhanced and
since the width of sprocket can be enlarged through guide
link portions on both sides, better stability of the
chain is obtained. In addition, it is possible to
obtain a chain which is inexpensive and excellent in
transmission capacity.

Accordingly, if the silent chain of the
present invention is applied to a motorcycle or the
like, the chain is light-weight to thereby improve
fuel cost, vibration of the chain is minimized to
thereby simplify and miniaturize a tensioner or the
like and a pressing force of the tensioner can be also
reduced to thereby decrease a friction loss to improve
transmission efficiency.

Moreover, the present invention provides a
silent chain wherein a plurality of link plates having
a shape to mesh   with sprocket teeth are superposed
one upon another lengthwise and widthwise of the chain,
which are connected widthwise by connecting pins, said
chain including a guide yoke  of which inner surface is
guided by the side of the sprocket teeth when meshed,
said guide yoke: being provided at a lower portion

- 4 -

externally of a meshing groove in the central portion of the widthwise and outermost link plate, and a cavity formed at an upper portion in the central portion of said meshing groove. With this arrangement, as compared with a conventional chain, the chain of the present invention is light-weight to thereby enhance transmission capacity per chain weight, weight per unit length of chain is reduced to thereby prevent noises resulting from vibrations and to minimize tear and wear of the sprocket teeth, and transmission load applied to the respective link plates is reduced to increase durability of the chain and enhance transmission capacity.

BRIEF DESCRIPTION OF THE DRAWINGS

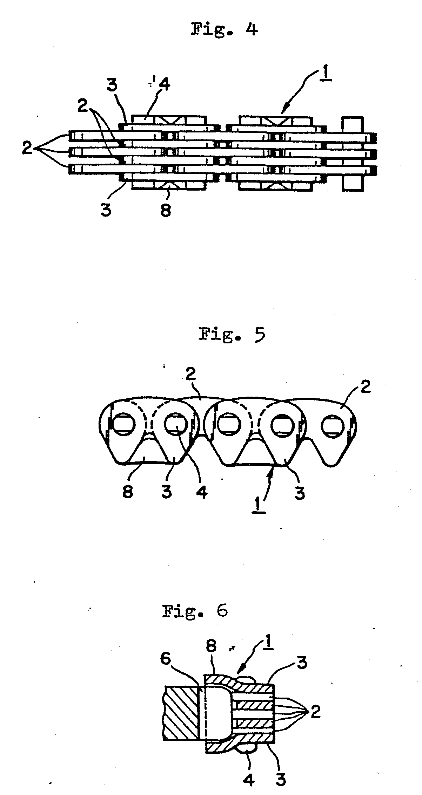

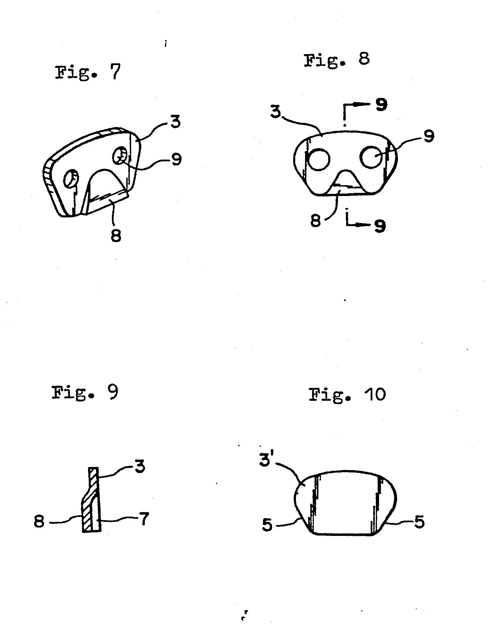

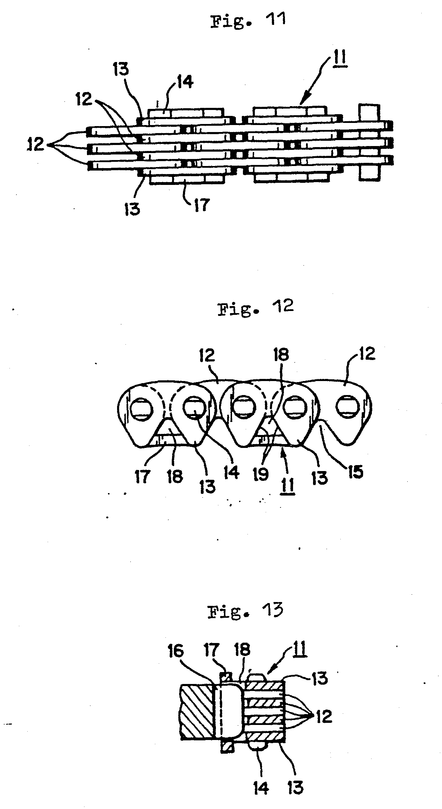

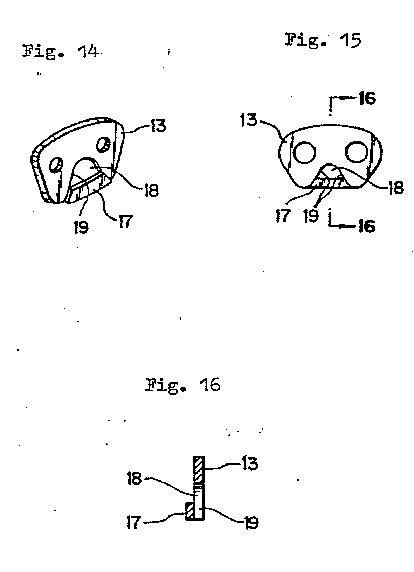

Figs. 1 to 3 show conventional silent chains, Fig. 1 being a plan view of a silent chain, Fig. 2 a front view of the same and Fig. 3 a view showing the state where the chain is meshed with the sprocket; Figs. 4 to 9 show a first embodiment of the present invention, Fig. 4 being a plan view of a silent chain, Fig. 5 a front view of the same, Fig. 6 a view showing the state where the chain is meshed with the sprocket, Fig. 7 a perspective view of a guide link, Fig. 8 a front view of the same, and Fig. 9 a sectional view

- 5 -

taken on line 9-9 of Fig. 8; Fig. 10 is a front view
of a conventional guide link; Figs. 11 to 16 show a
second embodiment, Fig. 11 being a plan view similar
to Fig. 4, Fig. 12 a front view of the same, Fig. 13
a view showing the state where the chain is meshed
with the sprocket, Fig. 14 a perspective view of an
outermost link plate, Fig. 15 a front view of an
outermost link plate, and Fig. 16 a sectional view
taken on line 16 - 16 of Fig. 15.

BEST MODES FOR PRACTICING THE PRESENT INVENTION

Embodiments of the present invention will
now be described with reference to the drawings.

Referring to Figs. 4 to 9, a silent chain 1
is constructed such that a plurality of meshing links
2 are superposed one upon another lengthwise and
widthwise, guide links 3 are disposed on both outer
sides of the chain, and they are connected by connecting pins 4.

In the guide link 3 of this embodiment, a
conventional flat-plate guide link 3' formed with
inclined surfaces 5 at both ends (see Fig. 10) having
the same surface angle with that of the meshing link
2 has its central lower portion buldged outwaredly to

- 6 -

thereby form a groove 7 to mesh with a sprocket tooth
6 and a side guide portion 8 guided by the side of
the sprocket tooth 6 (numeral 9 designates a hole
bored through which a connecting pin is inserted),
whereby the guide link 3 is meshed with the sprocket
tooth 6 similarly to the meshing link 2 and has a
guide function in which the buldged side guide portion
8 prevents disengagement when the sprocket meshes with
the chain.

Fig. 11 and thereafter show a second
embodiment.  This silent chain 11 is constructed such
that a plurality of link plates 12 are superposed one
upon another lengthwise and widthwise of the chian
and connected by connecting pins 14 widthwise, said
chain including a guide yoke 17 inner surface of which
is guided by the side of the sprocket teeth, said guide
yoke · being provided at a lower portion externally of
a meshing groove 15 of the widthwise and outermost
link plate 13, and a cavity formed at an upper portion
in the central portion of the meshing groove 15.  Thus,
since the outermost link plate 13 has a tooth 19
accurately meshed with the sprocket tooth 16 and the
guide yoke  17 accurately guided by the side of the
sprocket tooth 16, the link plate 13 can perform both guide function which prevents disengagement from the sprocket tooth 16 and function similar to the link plate 12 which meshes with the sprocket tooth 16. It will be noted that the cavity 18 formed in the outermost link plate 13 may have any size and shape within the range not impeding tensile strength of the silent chain.

## INDUSTRIAL APPLICABILITY

The silient chain in accordance with the present invention is suitable for use as power transmission means for machine tools, internal combustion engines and the like, and is particularly suitable for use for power transmission of motorcycles.

CLAIMS

1.      A silent chain wherein a plurality of link plates having a shape to mesh with sprocket teeth  are superposed one upon another lengthwise and widthwise of the chain, which are connected widthwise by connecting pins, characterized in that guide links provided on both outer sides have a central lower portion buldged outwardly to provide a groove to mesh with the sprocket and a side guide portion.


2.      A silent chain wherein a plurality of link plates having a shape to mesh with sprocket teeth  are superposed one upon another lengthwise and widthwise of the chain, which are connected widthwise by connecting pins, characterized said chain includes a guide yoke inner surface of which  is guided by the side of the sprocket teeth, said guide yoke  being provided at a lower portion externally of a meshing groove in the central portion of the widthwise and outermost link plate, and a cavity formed at an upper portion in the central portion of said meshing groove.

1 / 5

0118562

Fig. 1

Fig. 2

Fig. 3

Fig. 4

Fig. 5

Fig. 6

Fig. 7

3
9
8

Fig. 8

3
9
9
8

Fig. 9

3
8
7

Fig. 10

3'
5
5

Fig. 11

Fig. 12

Fig. 13

Fig. 14

Fig. 15

Fig. 16

# INTERNATIONAL SEARCH REPORT

0118562

International Application No. PCT/JP83/00247

## I. CLASSIFICATION OF SUBJECT MATTER (if several classification symbols apply, indicate all) ³

According to International Patent Classification (IPC) or to both National Classification and IPC

Int. Cl.³ F16G 13/04

## II. FIELDS SEARCHED

### Minimum Documentation Searched ⁴

| Classification System | Classification Symbols |
|---|---|
| I P C | F16G 13/00 – 13/07 |

| Documentation Searched other than Minimum Documentation to the Extent that such Documents are Included in the Fields Searched ⁶ | | |
|---|---|---|
| | Jitsuyo Shinan Koho | 1926 – 1983 |
| | Kokai Jitsuyo Shinan Koho | 1971 – 1983 |

## III. DOCUMENTS CONSIDERED TO BE RELEVANT ¹⁴

| Category* | Citation of Document, ¹⁶ with indication, where appropriate, of the relevant passages ¹⁷ | Relevant to Claim No. ¹⁸ |
|---|---|---|
| X | JP,U, 47-19655 (Nagai Yoshiharu) 6. November. 1972 (6. 11. 72) | 1, 2 |
| A | JP,Y2, 47-19440 (H Kabushiki Kaisha) 3. July. 1972 (3. 7. 72), Fig. 1 | 1, 2 |

* Special categories of cited documents: ¹⁵

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search ² | Date of Mailing of this International Search Report ² |
|---|---|
| August 11, 1983 (11.08.83) | August 22, 1983 (22.08.83) |

| International Searching Authority ¹ | Signature of Authorized Officer ²⁰ |
|---|---|
| Japanese Patent Office | |

Form PCT/ISA/210 (second sheet) (October 1981)